# EUROPEAN PATENT SPECIFICATION

(11) **EP 2 724 021 B1**
(45) Date of publication and mention of the grant of the patent: **22.05.2019**
(21) Application number: 12802424.7
(22) Date of filing: 20.06.2012
(51) Int. Cl.: F03D 1/00, B63B 35/00

(54) **A SELF-PROPELLED OFFSHORE WIND FARM INSTALLATION VESSEL, AND METHOD OF INSTALLATION USED IN THE CONSTRUCTION OF AN OFFSHORE WIND TURBINE FARM**
SELBSTFAHRENDES HOCHSEEWINDPARK-INSTALLATIONSSCHIFF UND INSTALLATIONSVERFAHREN ZUR KONSTRUKTION EINER HOCHSEE-WINDENERGIEANLAGE
NAVIRE D'INSTALLATION DE PARC ÉOLIEN OFFSHORE AUTONOME, ET PROCÉDÉ D'INSTALLATION UTILISÉ LORS DE LA CONSTRUCTION D'UN PARC ÉOLIEN OFFSHORE

(30) Priority: 21.06.2011 DK 201170319
(43) Date of publication of application: 30.04.2014
(73) Proprietor: Logima ApS, -2660 Brøndby Strand (DK)
(72) Inventor: HANSEN, Svend Erik, DK-2660 Brøndby Strand (DK); HANSEN, Peter, DK-2625 Vallensbæk (DK)
(74) Representative: AWA Denmark A/S
(86) International application number: PCT/DK2012/050207
(87) International publication number: WO 2012/175091

(56) References cited:
- EP-A1- 2 251 254
- WO-A1-01/64507
- WO-A1-03/093584
- WO-A1-2010/048665
- WO-A2-2004/087494
- WO-A2-2004/087494
- NL-C1- 1 023 142

## Description

The present invention relates to a self-propelled offshore wind farm installation vessel having at least four jack-up legs and a hull with two cantilevered arms in the stern end and an unloading space in between the cantilevered arms, which hull has a cargo main deck and a side section extending upwards at either longitudinal side of the cargo main deck, the wind farm installation vessel having ballast tanks and a ballast pumping system for changing the vessel draught between at least a first draught, at which the cargo main deck is submerged below sea level, and a second draught, at which the cargo main deck is above sea level.

The present invention also relates to a method of installation used in the construction of an offshore wind turbine farm where a self-propelled offshore wind farm installation vessel installs wind turbine foundations, towers, nacelles and wings to the wind turbine constructions erected from the sea bottom at the offshore farm.

In a comprehensive survey of the installation of all existing offshore wind farms, "Offshore Wind Energy Installation and Decommissioning Cost Estimation in the U.S. Outer Continental Shelf" made by Kaiser and Snyder, November 2010 for the Energy Research Group, LCC, Baton Rouge, Louisiana, USA, the average installation time for foundations in completed offshore wind farms is reported as 4.9 days per foundation of gravity type, and 3.7 days per foundation of monopole type. The fastest average time per foundation was 2.1 days for the Sprogø farm (gravity) and 1.5 days for the Horns Rev 1 farm (monopile), but in the latter three vessels were used for the installation. With respect to installation time for turbines, the average time to install a turbine was 4.1 days, but in some installations two vessels were used, so the average time can also be expressed as 5.7 boat days per turbine. The fastest installation rate was obtained at the Nysted farm, spending 1.3 days per turbine.

Some of the vessels used in the previous offshore wind farm installations are jack-up barges with a crane, or crane barges. The barges are towed between working positions, and the parts to be installed are supplied by another vessel, and the crane on the barge lifts the part from the supply vessel.

A vessel of the initially mentioned kind is known from WO 2004/087494 to Logima, where the vessel is for transporting gravity foundations or complete wind turbines mounted on gravity foundations from a harbor to the offshore wind farm where the foundations or complete wind mills are installed by being located in between the cantilevered arms and suspended in four wires while being lowered down to the mounting place on the sea bottom. Although this vessel is not provided with jack-up legs in the basic configuration, it is in the document suggested that the vessel can have jack-up equipment, which can lift the vessel such a limited distance upwards, that the vessel becomes stabilized against swell. It is further explained that the jack-up equipment can only be actuated during lowering or raising of a wind turbine held between the cantilevered arms, and that the jack-up equipment is inactive when the vessel is ballasted to the first draught for displacement of wind turbines to or from the loading position. It is furthermore suggested that the vessel can be positioned at the wind farm and be utilized to lower down to the sea bed wind turbines, which have been towed in a self-floating state from harbor to the farm.

In WO 03/093584 a complete wind turbine with wings and nacelle mounted on top of the tower is held fixed in a supporting device gripping about the lower end area of the tower. The supporting device can be displaced in horizontal directions in relation to the hull and thus move the bottom end of the tower out to be located above the upper end of a foundation. The tower is set down on the foundation by operation of the jack-up legs.

WO 03/066427 to Fred. Olsen Renewables describes a self-propelled vessel with two parallel hull sections and, in between these sections, two support structures for receiving complete wind turbines and lowering the same to the sea bottom.

US 2004/0042876 to Mammoet Marine describes a self-propelled vessel with a cargo deck and 6 jack-up legs. The vessel is for transporting wind turbines from harbor to the wind turbine farm, on which foundations have already been installed. The wind turbines are assembled on shore and placed in a supporting stage, and both stage and wind turbine are in harbor lifted onboard the vessel and placed on the cargo deck by a crane on the quay. A self-powered mobile crane is present on the cargo deck and is used at the offshore farm for hoisting the wind turbines out of the cage and placing them on the foundations.

WO 2010/062188 to Norwind describes a self-propelled vessel for transporting and installing wind turbine jacket foundations. Up to four jackets can be loaded onto a cargo deck, and at either side of the hull two trolley winches are movable on a rail structure extending along substantially the full length of the cargo deck and cantilevered arms at the stern of the vessel. The four winches can lift a jacket foundation off the deck and displace it to be positioned in between the arms, where the jacket foundation is subsequently lowered to the sea bed.

EP 2 251 254 to Leenars describes a semi-submersible, which at harbour receives a jacked foundation in a moon pool and a wind turbine tower with nacelle and wings at a storage position on deck. After transport to the wind farm, legs with spuds are lowered to the sea bed and locked in position, and the semi-submersible is ballasted to load the legs. A crane on the vessel is used to lower the jacket foundation to the sea bed and then used to lift the wind turbine onto the jacked foundation.

An object of the present invention is to increase the efficiency of the installation process for offshore wind turbines, and to provide a vessel and a method shortening the installation time required per completed wind turbine.

In view of this the initially mentioned self-propelled offshore wind farm installation vessel is according to the present invention characterized in that it has a main crane mounted at one of the side sections, which main crane has a boom with a length of at least 50 metres, and that the individual jack-up leg has a length of at least 45 metres. This allows the wind farm installation vessel to have, at open sea at the area of the offshore installation site, at least a first operating position, at which the vessel when ballasted to the first draught and with at least two jack-up legs in contact with the sea bottom comprises means to receive at the cargo main deck a barge with parts for construction of the wind farm, and a second operating position, at which the vessel is jacked-up by the at least four jack-up legs and the main crane can lift a part from the barge on the main cargo deck to the wind turbine construction erected from the sea bottom.

There are several time saving advantages by loading the parts for construction of the wind farm onto the vessel in a barge placed on the cargo main deck. A first advantage is obtained, because the time required for loading the barge onto the vessel is much shorter than the time needed for sailing the vessel to harbor, loading the vessel at the harbor and sailing back to the wind farm construction site.

A second advantage is caused by the fact that each part for construction of the wind farm has to be supported in and secured to special mountings in order not to be damaged during the voyage from harbor to the offshore installation site, and these mountings need to the installed in order to receive the part. As the construction work progresses at the wind farm, different parts are required, and it takes time to remove one type of mountings from the cargo main deck and install others. By loading a complete barge with parts onto the installation vessel, the specific mountings are present in the barge, and the barge as such can be placed directly on the flat upper surface on the cargo main deck.

A third advantage is related to the jacking-up in order to neutralize weather conditions. The above-mentioned average times to install a foundation and a turbine also include the periods where work could not be performed due to the weather, primarily due to too large waves. Although previously installed wind farms were installed in months with calm weather, there were days with little work due to the sea state. This problem will be much more pronounced in the coming years, because of the quite large need for installing offshore wind farms, and the restrictions in the number of available vessels for doing the work. A vessel capable of continuing to install, even when the waves are larger, will provide a significant advantage in shortening installation time. When the vessel is in the first operating position, but free floating without support from jack-up legs, a barge can be loaded, provided the significant wave height is less than 0.5 metres. When the vessel is supported by two jack-up legs in the first operating condition the barge can be loaded onto the vessel during sea states with a significant wave height larger than 0.5 metres and up to 2.0 metres. The barge loaded with parts for construction of the wind farm is thus loadable onto the cargo main deck of the wind farm installation vessel at open sea at the area of the offshore wind farm installation site while the installation vessel is in the first operating position and the sea state has a significant wave height in the range from 0.5 metres to 2.0 metres. This does very roughly entail that instead of having about 20% of the year where barges can be loaded onto the vessel at the offshore location, such loading can be performed during 80% of the year.

A fourth advantage relates to the equipment of the vessel with the main crane having a long boom in combination with the long jack-up legs allowing the vessel to be jacked out of the water. This allows the vessel to install the parts present on the barge to the wind turbine construction erected from the sea bottom. As the barge is stationary on the cargo main deck there is no movement between vessel and barge, and consequently the part to be installed can be handled, hooked up for lifting and lifted or lowered to the point of installation almost irrespective of the sea state.

In an embodiment, the vessel comprises other lifting equipment provided thereon, wherein the other lifting equipment includes on each side section two trolley winches, which are movable on a rail structure extending on the side section along substantially the full length of the cargo main deck and the cantilevered arm. The trolley winches provide an advantage in that they can in a continuous operation lift the part to be installed from the cargo main deck to a position between the cantilevered arms and lower the part down towards the sea bottom. The other lifting equipment can alternatively or supplementary be an auxiliary crane of the boom type.

In a further development of this embodiment each side section comprises a lower portion of quadrangular cross-section and an upper wall-shaped portion, which on its top carries the rail structure and on its side facing away from the cargo main area is provided with stiffeners. The lower portion forms part of the vessel hull and provides buoyancy when the vessel is in its first operating position at the first draught, and by locating the upper wall-shaped portion on top of the lower portion the trolley winches are positioned higher above the cargo main deck, which makes it possible to position parts or barges of higher height closer to the inner side of the lower portion and thus obtain better utilisation of the cargo space. This is in particular an advantage when the parts include gravity foundations. On the upper wall-shaped portion the stiffeners are provided on the side facing away from the cargo main area so that the side facing towards the cargo area can be substantially planar. The side section and the wall-shaped portion both act to provide some shelter on the cargo main deck and as such act to improve the working conditions on the deck. The rail structure can alternatively extend on the cargo main deck, or directly on top of the lower portion, or close to the side surface of the vessel hull.

In a further development the individual trolley winch includes a carrier, which is hooked around the rail structure and includes a trolley drive engaging with the rail structure, which preferably is a stationary tooth rack. This manner of mounting the carrier is advantageous for taking up high loads, and the stationary tooth rack allows accurate positioning of the trolley winch also when the weather is unfavourable. Alternatively, the carrier can be a unit riding entirely on top of the rail structure, like in a traditional railway.

In an embodiment the individual trolley winch has an upwards facing support area for temporarily mounting of the end of a gantry crane crossbeam, and wherein a pair of trolley winches can be operated in synchronism as a gantry crane when the crossbeam is mounted on the pair. The crossbeam can be lifted and placed on the pair of trolley winches by the main crane or by using an auxiliary crane. The possibility of converting a pair of trolley winches to a gantry crane is very advantageous, as the gantry crane configuration is well suited for lifting parts from any position on the cargo main deck to another position where it can be either lowered down on the sea bed or placed at an appropriate position for further handling, such as a launch position for the main crane. As an alternative, the vessel can be provided with a separate gantry crane, however conversion of two trolley winches into a gantry crane provides the vessel with a high degree of flexibility. When the vessel is loaded with foundation parts the four trolley winches can be used for positioning the foundation part in between the cantilevered arms and lowering the foundation part to the sea bottom; when nacelles or other parts of less size are to be handled the gantry crane can lift the part and position the part on any desired location of the deck; and when very heavy lifts are to be performed the four trolley winches can be converted into two gantry cranes that may operate in tandem.

In an embodiment, the main crane is mounted on a crane structure extending upwards from the side section, preferably a crane structure extending around one of the jack-up legs. Although it is possible to position the main crane on the cargo main deck or on top of the side section, there are several advantages by having the main crane mounted on a structure extending upwards from the side section. One advantage is that the main crane is not occupying space on the cargo main deck, space that is usable for efficient loading of the parts to be installed, and another advantage is that the main crane is mounted at a higher position than the deck or the top of the side section, and thus the main crane has a larger resulting lifting height above sea level for a given length of the crane boom. Wind turbines grow in size, and the positioning of the main crane in a high position on the vessel makes the main crane more efficient for installation of larger wind turbines. The preferred mounting of the main crane in a crane structure extending around one of the jack-up legs simplifies the overall design of the vessel and allows the main crane to operate over a larger area of the vessel, because the main crane can operate without hindrance in movement from the leg structure it surrounds.

In an embodiment, the individual jack-up leg has a length of at least 60 metres, preferably with a possible leg extension portion resulting in a total leg length of at least 75 metres, and the jack-up legs are operable to lift the wind farm installation vessel out of the water to a position where the main crane is utilized for mounting a nacelle or a wing onto the wind turbine construction. This embodiment is suitable for mounting nacelles and wings to a large wind turbine tower. The resulting effective lifting height of the main crane above sea level is composed of the jack-up height of the vessel above sea level and the height of mounting of the main crane on the vessel and the length of the main crane boom. The length of the jack-up legs thus plays a role in attaining a desired total lifting height of the main crane. The optional leg extension can be an upper leg portion, which is foldable with respect to the lower leg portion, so that the centre of gravity of the leg is suitably low when the leg is in folded position and the vessel is floating in the sea water.

In an embodiment the main crane has a lifting height above sea level of at least 110 meters when the wind farm installation vessel is jacked up at an installation site where the water depth is 40 metres. If the water depth at the wind farm is lower, then the lifting height is correspondingly higher. This lifting height allows the vessel to perform complete installation of towers, nacelles and wings onto offshore wind turbines of current kind. In future higher lifting heights may be required, and then the leg length may be increased and/or the main crane may be located higher up on the vessel and/or the boom length of the main crane may be increased. If the wind turbines are smaller in size the main crane lifting height may be lower.

In an embodiment additional storage space is provided as a removable cargo secondary deck in the area between the two cantilevered arms. This embodiment is primarily suited for storage of wings to be installed, but other part may naturally also be stored on the secondary deck. The addition of the secondary deck is for use when the parts are to be lifted up to an installation point, and not for lowering parts like foundations down into the water as such lowering is performed in the area in between the cantilevered arms.

In another aspect, the present invention furthermore relates to the initially mentioned method of installation. With a view to shortening the installation time required per completed wind turbine, the method is characterized in that the wind farm installation vessel at open see at the area of the offshore installation site is ballasted to a first draught, at which the cargo main deck is submerged below sea level, and at least two jack-up legs on the wind farm installation vessel are brought into contact with the sea bottom, and a barge with parts for construction of the wind farm is received at a cargo main deck of the vessel, following which the vessel is positioned at a particular site of installation and is jacked-up by at least four jack-up legs on the vessel, and a main crane lifts a part from the barge on the main cargo deck to the wind turbine construction erected from the sea bottom. The advantages in time saving have been described in the above with reference to the installation vessel. The method can be used with a vessel of the above-mentioned type, and the method can also be used with a vessel having no cantilevered arms, such as a vessel having a moon pool for lowering parts towards the sea bottom, or a vessel where the main crane is used for lowering such parts.

The installation process at the offshore farm has several stages. When the wind turbines have foundations of the jacket type or tripod type foundation piles are firstly driven into the seabed, and foundations are then installed on the foundation piles, and then the tower, nacelle and wings are installed on top of the foundations. It is possible to use a separate vessel for setting the foundation piles, and then use the barge with parts for construction of the wind farm to carry foundations for wind turbines when the barge is received on the cargo main deck.

In addition to or as an alternative, the barge with parts for construction of the wind farm can carry a template for ramming foundation piles into the sea bottom, and foundation piles when the barge is received on the cargo main deck. This may in particular be advantageous in cases where the installation of foundations is carried out more quickly that the setting of the foundation piles. The wind farm installation vessel can then be used to install foundations, for example 8 foundations received on two barges, and when empty the last barge can be changed out with the barge with the template and foundation piles, and the foundation piles for a number of installations can be installed in the sea bottom 10.

In one method, the wind farm installation vessel following installation of foundations at the offshore wind turbine farm under construction transfers to harbor, where turbine wings, turbine towers and nacelles for at least 9 wind turbines are loaded onto the cargo main deck and possibly onto a cargo secondary deck temporarily mounted in an area between two cantilevered arms on the vessel, and then the wind farm installation vessel transfers back to the offshore farm under construction and installs the towers, nacelles and wings. Due to the large capacity it may be advantageous to let the installation vessel return to harbour for being loaded with these parts, when a sufficient number of foundations have been installed. As an alternative, a number of turbine wings, turbine towers and nacelles may be transported to the offshore farm site on a barge and be received on the cargo main deck of the installation vessel.

In one method a pair of trolley winches carrying a crossbeam in a gantry crane configuration is used to lift a nacelle or another wind turbine part from its storage position on the cargo main deck to a launch position on the deck, following which the main crane lifts the nacelle or other wind turbine part from the launch position. This makes it possible to store parts on the deck, also in positions where the parts cannot be lifted by the main crane, such as in the area close to the main crane or in an area outside the reach of the main crane.

In the following the illustrative, schematic embodiments and schematic examples of the method according to the present invention are described in further detail with reference to the highly schematic drawings, on which
Fig. 1 is a diagram showing significant wave heights at the Mediterranean position 20°E, 38°N,
Fig. 2 is a side view of a wind farm installation vessel according to the present invention,
Figs. 3 and 4 are views from above of the vessel in Fig. 1, where Fig. 3 illustrates tanks and a cross-section through the superstructure, and Fig. 4 illustrates a cargo secondary deck in mounted position behind the stern of the vessel,
Fig. 5 is a front end view of the vessel in Fig. 1,
Fig. 6 depicts a midship cross-sectional view of the vessel in Fig. 1,
Figs. 7-11 are view from above illustrating loading of a barge with foundations onto the cargo main deck of the vessel in Fig. 1,
Figs. 12-16 illustrate installation of a foundation received with the barge in Figs. 7-11, where Figs. 12 and 16 are perspective views and Figs. 13-15 are side views of the vessel in Fig. 1,
Fig. 17 is a view from above illustrating a barge with a template and foundation pipes in received condition on the cargo main deck of the vessel in Fig. 1,
Fig. 18 is a perspective view illustrating the vessel of Fig. 1 with nacelles, towers and wings for wind turbine installation, and

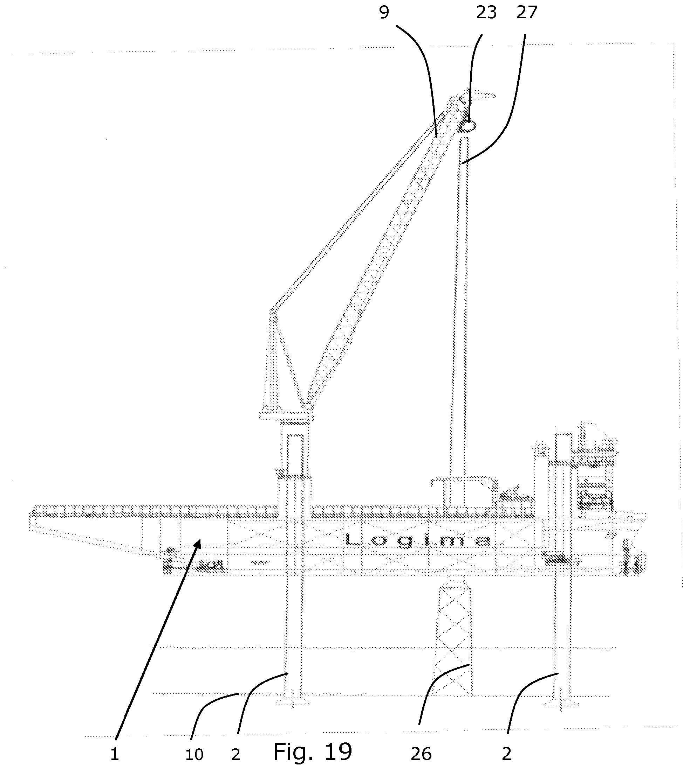

Fig. 19 is an illustration in side view of the vessel of Fig. 1 while it installs a nacelle on top of a wind turbine tower.

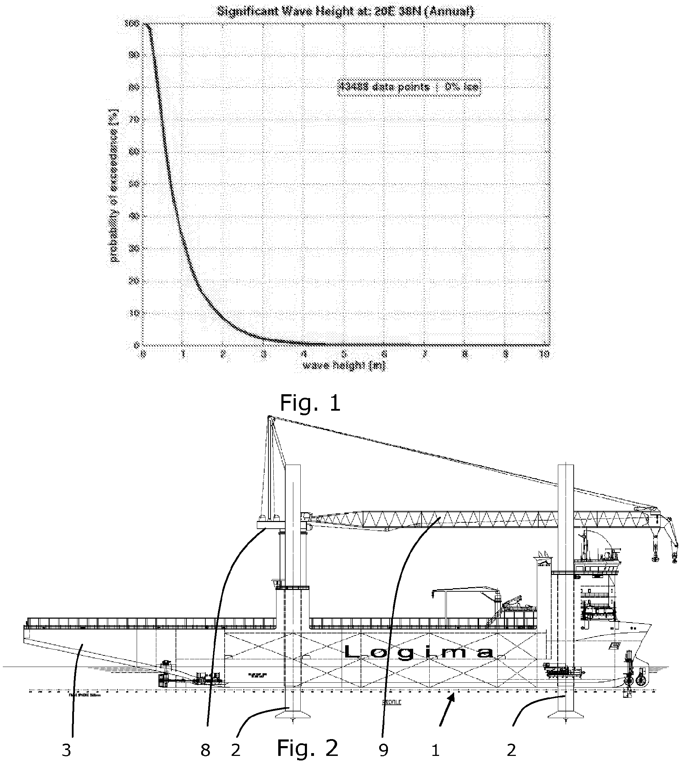

The weather plays a role for the possibilities of installing offshore wind turbine farms. The known methods are sensitive to weather, and it is a well-known experience that installation work has to be paused due to weather conditions. Fig. 1 presents a graph of the probability of exceedance (in percent) of a significant wave height in meters at the location 20°E, 38°N which is in the Mediterranean in the waters west of Greece. It appears that a significant wave height of 0.5 metres is exceeded during about 70% of the year, while a significant wave height of 2.0 metres is exceeded only during about 9% of the year. Although these waters are not particularly calm waters, the graph is relevant for locations where offshore wind farms are of interest. The graph is based on annual data.

In Danish waters offshore locations of interest to wind farms have been investigated. Table 1 is based on "Blue Reef Hydrograpic Design Data", The Danish Forest and Nature Agency, July 2007 (data in the table have been rounded off to integers), where data were collected during 10 years of observations. It appears from the table that a significant wave height of 0.5 metres was exceeded most of the time in all months, whereas a significant wave height of 2.0 metres was only exceeded in more than 20% of the time during December (28%), and most of the year it was exceeded in less than 10% of the time. Waves are one of the factors that affect the installation work of wind turbines.

**Table 1.**

| Monthly significant wave height exceedance probability based on 10 years of hindcast data for Læsø Trindel in Kattegat, Denmark. | | | | | | | | | | | | |
|---|---|---|---|---|---|---|---|---|---|---|---|---|
| Hₘ₀ | Percentage of Exceedance of significant wave height (in metres) | | | | | | | | | | | |
| M | Jan | Feb | Mar | Apr | May | Jun | Jul | Aug | Sep | Oct | Nov | Dec |
| >0.2 | 99 | 100 | 97 | 91 | 88 | 95 | 95 | 97 | 98 | 99 | 99 | 99 |
| >0.4 | 93 | 98 | 87 | 77 | 67 | 80 | 82 | 90 | 88 | 97 | 94 | 95 |
| >0.6 | 81 | 89 | 72 | 58 | 52 | 59 | 62 | 75 | 79 | 96 | 85 | 81 |
| | | | | | | | | | | | | |
| >1.8 | 28 | 22 | 22 | 14 | 7 | 8 | 4 | 7 | 15 | 21 | 23 | 37 |
| >2.0 | 19 | 16 | 17 | 9 | 4 | 5 | 1 | 3 | 10 | 16 | 16 | 28 |
| >2.2 | 12 | 11 | 11 | 6 | 2 | 3 | 0 | 2 | 4 | 11 | 10 | 22 |

The other weather factor of significance is the wind. In the below Table 2 data are based on the report "Wind and wave frequency distributions for sites around the British Isles" by F. Geos, Offshore Technology Report 2001/030. It appears that a mean wind speed of 8.0 metres per second is exceeded most of the time during the year, whereas a mean wind speed of 17.2 metres per second is only exceeded in less than 10% of the time, except in January where it was exceeded in 13% of the time.

**Table 2.**

| Monthly Percentage Exceedance Distribution at the position 61.373°N, 0.670°W on the West Shetland Shelf. | | | | | | | | | | | | |
|---|---|---|---|---|---|---|---|---|---|---|---|---|
| WS | Percentage of Exceedance of Mean Wind Speed | | | | | | | | | | | |
| m/s | Jan | Feb | Mar | Apr | May | Jun | Jul | Aug | Sep | Oct | Nov | Dec |
| 3.4 | 99 | 97 | 97 | 97 | 93 | 95 | 92 | 92 | 97 | 97 | 99 | 99 |
| 5.5 | 94 | 90 | 91 | 84 | 71 | 76 | 68 | 71 | 83 | 87 | 92 | 94 |
| 8.0 | 81 | 74 | 74 | 58 | 42 | 39 | 32 | 42 | 57 | 67 | 72 | 80 |
| 10.8 | 58 | 52 | 50 | 30 | 16 | 11 | 9 | 13 | 28 | 40 | 48 | 57 |
| 13.9 | 34 | 29 | 24 | 8 | 3 | 2 | 1 | 2 | 12 | 18 | 23 | 29 |
| 17.2 | 13 | 9 | 8 | 1 | 0 | 0 | 0 | 0 | 4 | 5 | 7 | 9 |
| 20.8 | 3 | 1 | 1 | 0 | 0 | 0 | 0 | 0 | 1 | 1 | 1 | 2 |

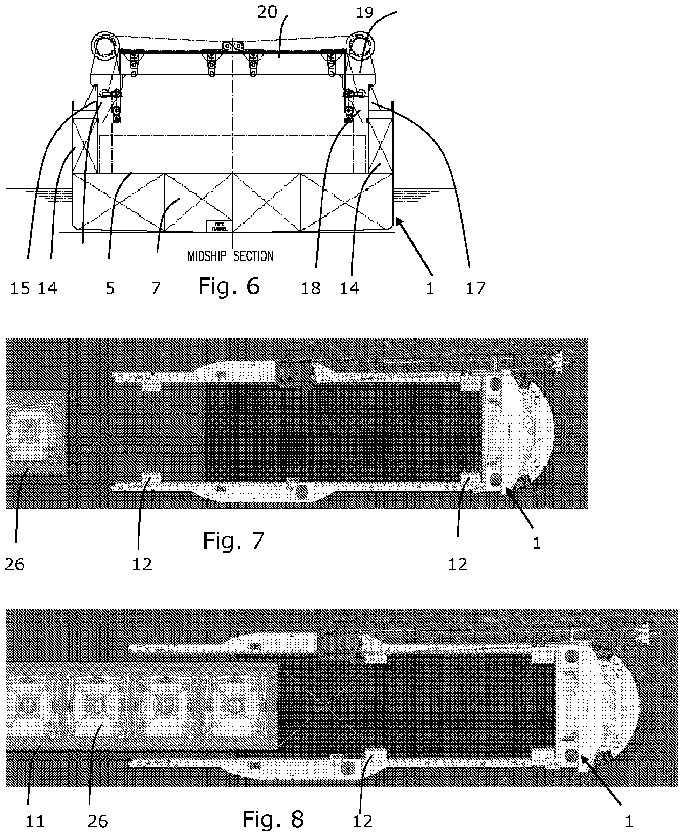

An embodiment of a self-propelled wind farm installation vessel 1 is illustrated in general in Figs. 1-6. The installation vessel has a hull with two cantilevered arms 3 extending aft of the stern of the hull. An unloading space 4 for lowering parts towards the sea bottom is present in between the arms 3. The aft part of the hull is twin-skeg shaped with a propulsion engine mounted in each skeg. The individual propulsion engine drives a propeller shaft with a propeller. A cargo main deck 5 occupies most of the area of the vessel, and a side section 6 extends upwards on the starboard and port sides of the cargo main deck. The side section 6 includes a lower portion 14 of quadrangular shape, as illustrated in Fig. 6. Below the cargo main deck the hull is almost completely occupied with tanks, all or the majority of them being ballast tanks 7. The interior of lower portions 14 are also utilized as tanks. The ballast tanks are via ballast pipes (not shown) connected with ballast pumps at a ballast pump room (not shown). The ballast pump room may conveniently be located in extension of one of the engine rooms in the skeggs and/or in an engine room below the superstructure in the bow end of the hull. The ballast tanks have a total capacity of about 34.000 m³. The ballast pumps have a capacity of about 17000 m³ per hour, or e.g. 7000 m³ per hour.

The side section 6 has a substantially flat inner side facing the cargo main deck, and this side extends upwards into an upper wall-shaped portion 15, which on its top carries a rail structure 13 and on its side facing outwards to the sea is provided with stiffeners 17 supporting the wall and the rail structure. Wall-shaped portion 15 and rail structure 13 extend from the forward end of the cargo main deck to the aft end of cantilevered arms 3.

The wind farm installation vessel is provided with four jack-up legs 2. Each leg extends vertically through the hull within a jack house, which is integrated in the hull. The jack house is a steel casing having a quadrangular shape in horizontal cross-section. Two of the jack-up legs are located forward of the cargo main deck, and the two other jack-up legs are located in side sections 6 at about 2/3 of the length of the cargo main deck toward the stern. The jack houses extend upwards from the side sections. The side section has increased width so that the jack houses are integrated in the hull, and thus the vessel has increased breadth in the area of the aft jack-up legs and to the stern of the hull. The increased breadth is larger than the breadth of the vessel forward of the area of the jack houses. In addition to including the jack-up leg construction within the hull, which protects the leg construction, this also due to the increased breadth of the hull provides an advantage to the stability of the vessel in a condition with submerged cargo main deck. As an alternative if stability is required, the breadth of the entire hull could be slightly increased, but this would likely result in a larger dead weight of the vessel.

Each jack-up leg is of circular cross-section and an outer diameter of about 4 metres. Each jack-up leg is provided with a drive motor capable of driving the leg up or down. The motor can either be an electromotor or a hydraulic motor. Energy, be it electric or hydraulic, is supplied from power generating engines in en engine room located e.g. in the starboard side of a forward region of the hull in an area next to the two forward jack-up legs. These engines can generate a total power of about 17.000 kW. These engines are air-cooled in order to continue to operate as the vessel is jacked-up out of the water. As an alternative, the engines may be water cooled and supplied with cooling water from a pump submerged in the sea and hanging down from the hull when the latter is out of the water.

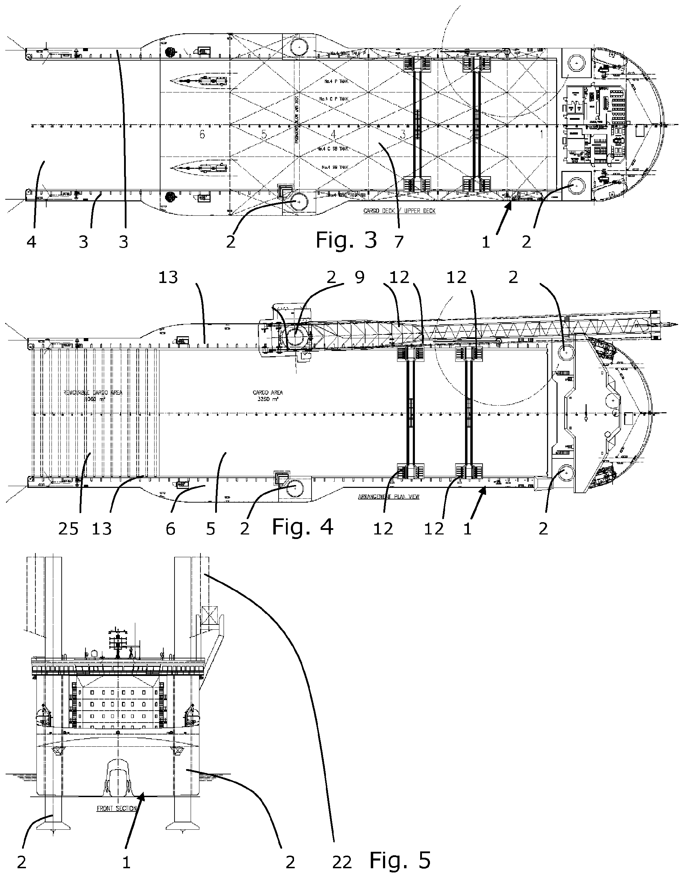

Each leg is able to lift at least a fourth of the weight of the vessel, preferably with a margin of excess lifting force of at least 5% and preferably at least 10%, including the parts and barge loaded onto the vessel. The legs preferably have a jack-up speed for a full leaded vessel of at least 0.5 metres per minute, and suitably at least 0.8 metres per minute. The jacking-speed without load is about the double of the speed with load. The legs and drive are suitably of the rack and pinion type jack as it is rather simple. It consists of a number of pinions positioned on racks mounted on the legs. The pinions are driven by gear boxes and electric or hydraulic motors. The rack and pinion system may be supported by rubber pads to absorb loads. The legs are preferably cylindrical tubular legs guided by an upper guide, positioned in the jack house mounted in the hull and a lower guide at the bottom of the hull. The leg may be locked in a certain position by brakes of the drive motors, or there may be a separate brake or lock provided for the leg. Other jack-up systems for the legs are also possible, such as a system based on jacking cylinders acting on rings which are temporarily lockable on the leg and are shifted to new positions as the leg moves in relation to the jack house. The drive may alternatively be based on a system of winches, which however is not preferred as the length of the legs is rather long in order to allow operation of the vessel at water depths larger than 15 to 20 metres. Each jack-up leg 2 has a length of at least 45 metres, preferably a length of at least 55 metres, and even more preferably a length of 65 metres or more. It is possible to provide each jack-up leg with a leg extension 22 and thus obtain leg lengths of e.g. 80 metres or even 90 metres or 100 metres. Leg extensions 22 are illustrated in Fig. 5. The leg extension is able to be located, in a folded down position, next to the lower part of the leg, which provides the advantage of a lower centre of gravity, and naturally also a lower total height which may have influence on the possibility of navigating the vessel below bridges.

A main crane 8 is mounted on a crane structure extending around the aft jack-up leg on the port side. Such a positioning of the main crane provides the structural advantage that the supporting steel column for the crane is mounted on top of the jack house for the leg, and this saves weight in comparison to mounting the main crane in a position separated from the jack house. The main crane 8 has a base body or platform that can rotate with respect to the supporting steel column, and an operating cabin mounted on the platform rotates together with the crane. Main crane 8 has a boom 9 with an inner end pivotably connected to the platform next to the operating cabin.

On the platform there are electric or hydraulic drive motors driving winches for at least a boom hoist, a main hoist and an auxiliary hoist. The hoists include multi part wires running from the winch upwards around guides at the top of a backstay structure fixed to the platform and onwards to the free outer end of the boom. The boom hoist runs to a position at the upper end of the boom and is used to lift or lower the outer end of the boom. The main hoist runs to a main hook hanging down at the end of the boom. A whip hoist for an auxiliary hook or whip hook may run along the length of the boom. The boom may be equipped with an outer section which in a telescopic manner may be extendible from the end of the boom in order to increase the reach of the main crane. A supporting structure for the boom extends from the forward jack house in the port side of the vessel. When the main crane is not in use, the boom rests in the supporting structure.

With respect to capacity the main crane has a boom length of 75 metres, possibly extendible with 15 metres with the outer section. The lifting capacity of the main hook is 600 t at a lifting radius in the range from 16 to 20 metres and 200 t at a lifting radius of 55 metres. The whip hoist and hook located at the outermost end of the boom has a lifting capacity of 50 t and is certified for man-riding and may thus be utilized for hoisting personnel to the installation points. It is of course possible to make the main crane with other capacities and lifting lengths.

Trolley winches 12 are mounted on the rail structure 13 on the side sections. There are two trolley winches 12 on the side section on port side and two trolley winches 12 on the side section on starboard side of the vessel. The trolley winch includes a carrier 18, which with an upper end section extending outwards is hooked up and around the rail structure. The major part of the carrier thus hangs down on the inside of the wall-shaped portion 15. The carrier includes a trolley drive with toothed wheels engaging with a stationary tooth rack in the rail structure. The drive includes a hydraulic or electric drive motor mounted in the carrier. A winch is mounted in the carrier rotatable about an axis extending in the longitudinal direction of the vessel, and a plurality of drive motors of electric or hydraulic type is installed to the winch. A winch wire runs to a hook which may either hang down from carrier 18, when the winch is configured for traditional winch operation, or may hang down from a crossbeam 20, when a trolley winch on the starboard side and a trolley winch on the port side as a pair are configured as a gantry crane. In the latter configuration the gantry crane crossbeam 20 is positioned on an upwards facing support area 19 on each of the carriers in the pair.

The pair of trolley winches can be operated in synchronism when the crossbeam is mounted on the pair. The trolley winches have an individual lifting capacity of 500 t. When all four trolley winches are configured as two gantry cranes the lifting capacity is thus two times 1000 t. The trolley winches can be operated individually from a local position at the carrier, and they can be operated remotely.

Remote operation of the trolley winches can be effected from the bridge in the forward superstructure or from a control station in a cabin located at the aft, inner side of the top of the starboard aft jack house. At this position there is a full view of the complete cargo main deck and a clear view of the unloading space between cantilevered arms 3.

In order to facilitate access to the aft cabin in the jack house, also when the vessel is positioned with submerged cargo main deck, a passageway is provided in the hull below the cargo main deck, which passageway extends between the two side sections 6, both being provided with access doors to the deck areas on the upper side of the side sections, and internal ladders or stairs to the passageway below deck.

An auxiliary crane with a main hook lifting capacity of 20 t at a lifting radius of 20 metres is installed on the port side of the side section 6 at a position of about 18 metres from the forward end of the cargo main deck. This auxiliary crane is also certified for man-riding and can be used for transferring supplies, minor cargo items and personnel to and from the vessel. Electric or hydraulically driven capstans are mounted at several locations on the vessel, such as on the deck next to the forward end of the cargo main deck, on the deck of the cantilevered arms and on side sections 6 near the aft end of the cargo main deck.

The propulsion and positioning system of the installation vessel includes two steerable Azimuth thrusters mounted in the forward end of the cantilevered arms. Each Azimuth thrusters has a power of 3000 kW. In the bow area of the vessel there is a tunnel thruster having a power of 1500 kW and an Azimuth thruster having a power of 1800 kW. The thrusters are controllable either individually or in an integrated manner from a common dynamic positioning control system operable from the bridge in the superstructure or operable from the aft cabin. The main propulsion engines may provide the vessel with a service speed of e.g. 13 knots.

A cargo secondary deck 25 may be installed in the area between the two cantilevered arms. This deck is constructed of removable, elongate deck sections which may be placed on top of the rail structures on the cantilevered arms. Fig. 4 illustrates the cargo secondary deck in installed position, and in Fig. 3 the cargo secondary deck has been removed. When not in use the elongate deck sections can be stored on any convenient location on the cargo main deck or on the deck space forward of the cargo main deck.

Otherwise, the vessel is equipped in traditional manner with mooring arrangements, life boats, a superstructure suitable for accommodating the needs of the crew and other personnel, fuel oil tanks, fresh water tanks, drain tanks, freshwater systems, heating systems, navigation systems, communications systems etc.

The wind farm installation vessel has the main particulars of a length of about 161 metres, a maximum bredth of about 46 metres, a depth to the cargo main deck of about 7.2 metres, a depth to the cargo secondary deck of about 15 metres, and consequently a total height of side sections 6 and wall-shaped portion 15 of more than 7 metres, and a free sailing draft of about 5.3 metres. The jacking system can elevate a total load of at least 22.000 t, such as 25.000 t. The vessel is able to operate in wind speeds up to 20 m/s and in sea states of up to 2.0 metres significant wave height. This provides the vessel with all-year-round operating capability, as will be clear when comparing with the information in Tables 1 and 2.

Examples of methods of installation used in the construction of an offshore wind turbine farm are now described. The examples given may supplement one another in the construction, or they may be alternatives, depending on the type of example.

### Example 1

### Barge loading at offshore farm location

The process of loading a barge onto the cargo main deck is illustrated in Figs. 7 to 11. The following description applies to a situation where the sea state is at 2.0 metres significant wave height and the wind speed is at 20 metres per second. Vessel 1 is sailed out of the wind farm constructional site to a nearby location where imprints of the jack-up legs are unable to influence the field.

The ballasting system is activated and ballast taken in until the installation vessel is at a first draught with the cargo main deck submerged below sea level to a depth greater than the draught of a barge to be loaded. The jack-up four legs are activated and lowered onto the sea bottom and loaded with sufficient force to maintain vessel 1 in stable state with no movement from the waves. During this process any empty barge on the cargo main deck will enter into self-floating position and may be towed away from the installation vessel.

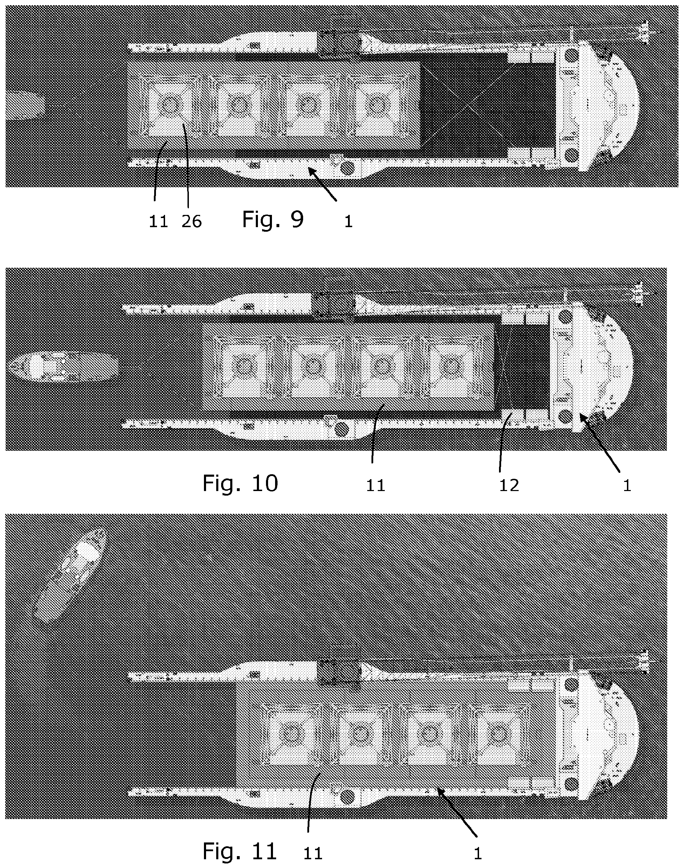

During the ballasting process or following the end thereof the vessel is positioned with the bow facing the wind and waves. In this position the hull of the vessel provides a calmer area just aft of the vessel. A barge loaded with parts for the installation of the farm has been towed from port to the offshore farm location. While one end of the barge is still connected to the tug boat the other end of the barge is connected with wires to two trolley winches 12 positioned on the cantilevered arms, the connection preferably being in the crossing pattern illustrated in Fig. 7 where the wire from the starboard trolley winch is secured at the forward port corner of barge 26, and where the wire from the port side trolley winch is secured at the forward starboard corner of barge 26. This provides precise control over the position of the barge end in relation to the cantilevered arms. The trolley winches are then activated to move in unison in the forward direction along the rail structure 13. When the trolley winches reach their forward most position as illustrated in Fig. 10 the barge has been received almost completely in a position above the cargo main deck. A wire from a capstan can be used to perform a final forward haul, if required. When the barge is in the desired position, the aft end of the barge is moored to vessel 1 and the tug boat is released. The jack-up legs are raised and the ballasting system is then activated to pump ballast water out of the ballast tanks, until the cargo main deck is at a desired height above sea level, as illustrated in Fig. 11, and then installation vessel 1 sails to the next installation position in the offshore farm.

A full duration of this procedure can be the following:

| | |
|---|---|
| Spud in and preload | 1 h 30 min |
| Lower vessel to flood cargo deck | 2 h 00 min |
| Barge out | 1 h 00 min |
| Barge in | 1 h 00 min |
| Ballast to sailing mode | 2 h 00 min |
| Lifting legs and move off | 0 h 30 min |
| Total barge handling cycle | 8 hours. |

If weather conditions are less severe, it may be sufficient to use the two aft jack-up legs to contact the sea bottom, and if weather is calm jacking-up can be dispensed with and further time saved.

### Example 2

### Jacket installation sequence

A jacket installation sequence follows a barge loading sequence where the barge carries jacket shaped wind turbine foundations 26. The installation vessel is positioned with unloading space 4 vertically above the installation site on the sea bottom, where foundation piles have already been installed, either by vessel 1 in a previous procedure or by another installation vessel.

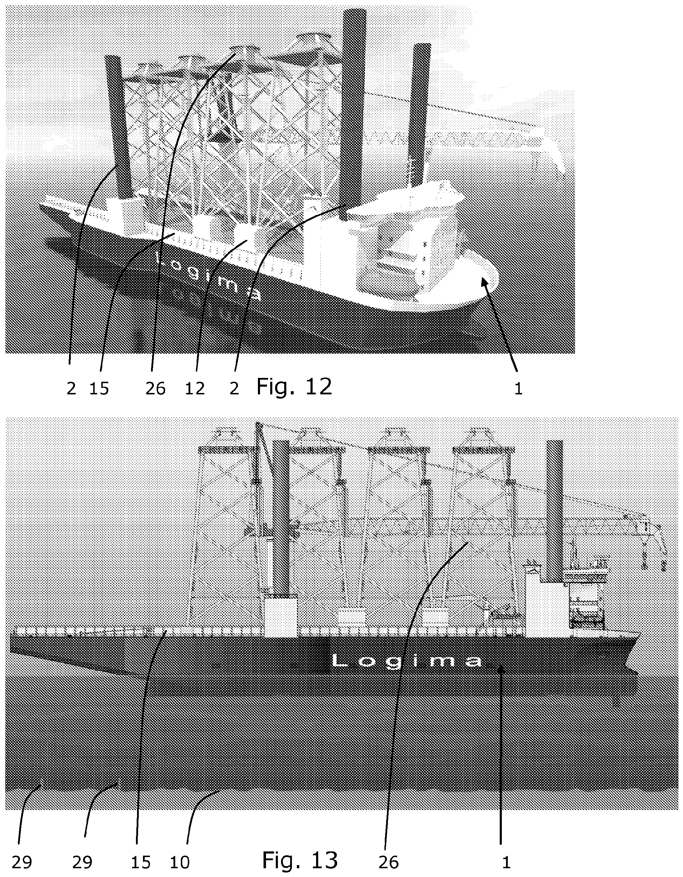

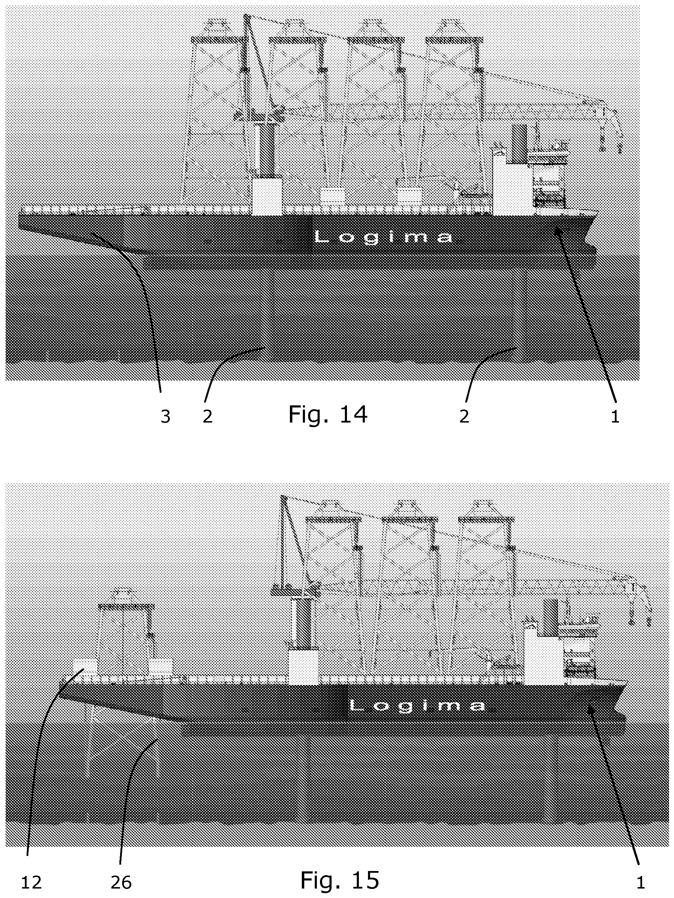

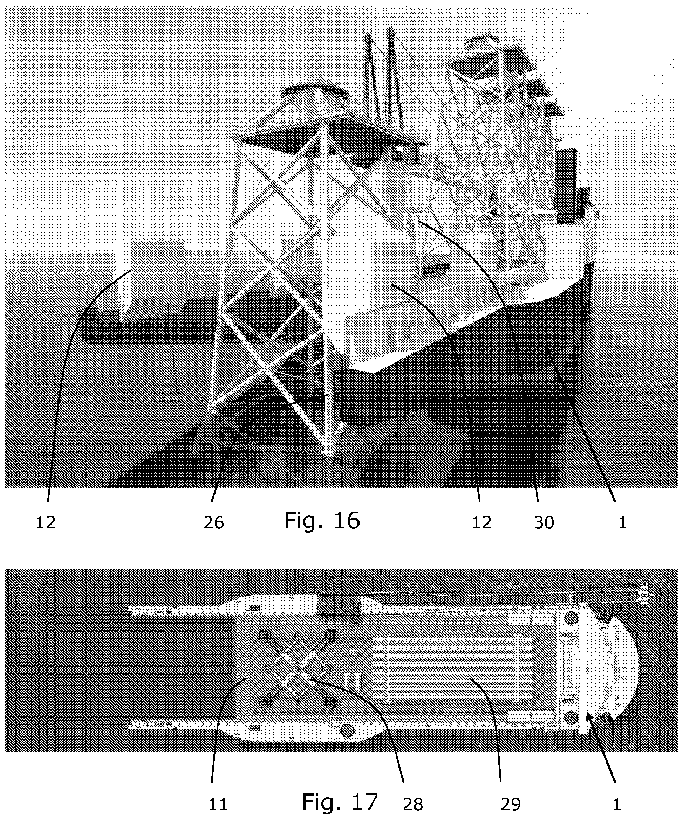

The jacked installation sequence is illustrated in Figs. 12 to 16, where Fig. 13 illustrates vessel 1 in position over foundation piles 29. The jack-up legs are activated into contact with the sea bottom 10 and loaded until vessel 1 is unaffected by waves. This position is illustrated in Fig. 14. The four trolley winches are positioned next to each their leg of the aft jacket foundation on the barge and the wires are connected with the jacket foundation. The trolley winches are activated in unison to lift the jacked foundation and drive it to a position at the unloading space where the foundation 26 is lowered down towards the foundation piles 26. A steering wire 30 may be secured at the top of the foundation 26 at either side and extended to a capstan on the vessel. These two steering wires illustrated in Fig. 16 make it easy to control the exact position of the lower ends of the foundation in the transverse direction, and the exact position in the longitudinal direction is controlled by positioning the trolley winches on the rail structure. The tubular portions at the lower end of the jacket foundations are thus easily controlled to match the position of the foundation piles on the sea bed. The jacket foundation is then lowered the final distance down into engagement with the foundation piles. Then the grouting operation is performed where grouting cement is pumped down to the foundation piles to lock foundation 26 in place. The installation vessel is jacked free of the bottom by lifting the jack-up legs, and the vessel is moved to the next location.

A full duration of this procedure can be the following:

| | |
|---|---|
| Approach and positioning | 0 h 30 min |
| Jack up and preload | 1 h 30 min |
| 4 point hook up and launch preparation | 1 h 00 min |
| Move to arms and steering wires hook up | 0 h 30 min |
| Lower jacket | 1 h 30 min |
| Grouting of jacket | 5 h 00 min |
| Retrieve all and make ready to move | 1 h 00 min |
| Jack down and move off | 0 h 30 min |
| Move to next location | 0 h 30 min |
| Total installation cycle | 12 hours |

### Example 3

### Prepiling sequence

A prepiling installation sequence follows a barge loading sequence where the barge carries a template 28 for setting of foundation piles and a load of foundation piles. The installation vessel is positioned with unloading space 4 vertically above the installation site on the sea bottom, and the four trolley winches are positioned next to each their corner of template 28 on the barge. The trolley winches are activated in unison to lift the template and drive it to a position at the unloading space where the template is lowered down towards to be position on the sea bed. The template is adjusted to horizontal position, and main crane 8 is activated to lift a foundation pile 26 into position in a corner guide on the template, and then a ram unit illustrated as a round item on the barge is lifted onto the top end of the foundation pile and is connected to the power units illustrated as boxes on the barge in Fig. 17, and the ramming procedure is performed. When finished the next foundation pile is lifted and positioned in the another corner of the template on the sea bed and the ramming procedure is repeated, and so forth until all four foundation piles have been rammed, and then the trolley winches lift the template from the sea bed and relocates it on the barge.

A full duration of this procedure can be the following:

| | |
|---|---|
| Approach and positioning | 0 h 30 min |
| Jacking and preload | 1 h 30 min |
| Loading piles in template | 4 h 00 min |
| Hook up and launch preparation | 1 h 00 min |
| Move template to arms | 0 h 30 min |
| Lower template and adjust to seabed | 1 h 30 min |
| Hammer 4 piles | 5 h 00 min |
| Retrieve all and make ready to move | 1 h 00 min |
| Jack down and move off | 0 h 30 min |
| Move to next location | 0 h 30 min |
| Total installation cycle | 16 hours |

It is possible to save an additional 4 hours of installation time by loading the piles in the template before it is to be transferred to the sea bottom, thus bringing the total installation cycle down to about 12 hours.

### Example 4

### Installation of wind turbine on foundation

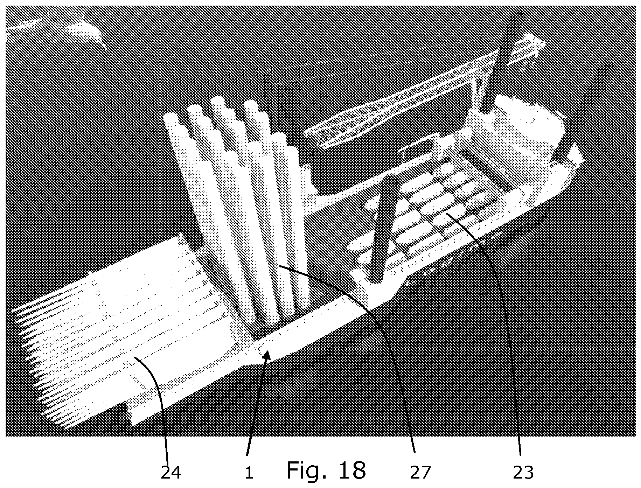

Wind turbine parts for the installation, including towers 27, wings 24 and nacelles 23 are loaded onto vessel 1, either on a barge received on the cargo main deck as explained in the above, or in harbor, which requires that vessel 1 sails to harbor and back again. If the vessel sails to harbor the cargo secondary deck 25 can be installed to increase the cargo area of vessel 1. Fig. 18 illustrates vessel 1 loaded with nacelles, towers and wings for installation of 18 wind turbines.

Installation vessel 1 is sailed in position next to a preinstalled foundation 26. Then jack-up legs 2 are activated to lift the vessel entirely out of the water. The main crane is activated to lift firstly a tower over to the foundation where it is installed, then the nacelle is lifted onto the tower and installed, and then the wings are lifted to the nacelle and installed.

During the installation process the vessel can be jacked up to the top position of jack-up legs, if need be in order to increase the resulting lifting height of the main crane. The total lifting height of the vessel at a water depth of 40 metres is about 120 metres above sea level.

After completed installation of a wind turbine the vessel is jacked down and relocated to the next installation position.

### Example 5

It is naturally also possible to install already mounted wind turbines, as it is explained in WO 2004/087494. During such installation it is also possible to use the trolley winches to partially lift the gravity foundation from the deck instead of requiring it to be self-floating.

The vessel may have other dimensions, and modifications may be made within the scope of the patent claims. When the dimension t is mentioned in the above it designates metric tons.

Details in the above-mentioned embodiments and methods may be combined into further embodiments and methods within the scope of the patent claims.

## Claims

1. A self-propelled offshore wind farm installation vessel (1) having at least four jack-up legs (2) and a hull with two cantilevered arms (3) in the stern end and an unloading space in between the cantilevered arms, which hull has a cargo main deck (5) and a side section (6) extending upwards at either longitudinal side of the cargo main deck, the wind farm installation vessel having ballast tanks (7) and a ballast pumping system for changing the vessel draught between at least a first draught, at which the cargo main deck (5) is submerged below sea level, and a second draught, at which the cargo main deck (5) is above sea level, **characterized in that** the wind farm installation vessel has a main crane (8) mounted at one of the side sections, which main crane has a boom (9) with a length of at least 50 metres, and that the individual jack-up leg has a length of at least 45 metres, such that the wind farm installation vessel at open see at the area of the offshore installation site has at least a first operating position, at which the vessel ballasted to the first draught and with at least two jack-up legs (2) in contact with the sea bottom comprises means to receive at the cargo main deck a barge with parts for construction of the wind farm, and a second operating position, at which the vessel (1) is jacked-up by the at least four jack-up legs (2) and the main crane (8) can lift a part from the barge on the main cargo deck to the wind turbine construction erected from the sea bottom.

2. Wind farm installation vessel according to claim 1, wherein the vessel comprises other lifting equipment provided thereon, wherein the other lifting equipment includes on each side section (6) two trolley winches (12), which are movable on a rail structure (13) extending on the side section along substantially the full length of the cargo main deck (5) and the cantilevered arm (3).

3. Wind farm installation vessel according to claim 2, wherein each side section (6) comprises a lower portion (14) of quadrangular cross-section and an upper wall-shaped portion (15), which on its top carries the rail structure (13) and on its side facing away from the cargo main area is provided with stiffeners (17).

4. Wind farm installation vessel according to claim 3, wherein the individual trolley winch (12) includes a carrier (18), which is hooked around the rail structure and includes a trolley drive engaging with the rail structure (13), which preferably is a stationary tooth rack.

5. Wind farm installation vessel according to any of the claims 2 to 4, wherein the individual trolley winch (12) has an upwards facing support area (19) for temporarily mounting of the end of a gantry crane crossbeam (20), and wherein a pair of trolley winches can be operated in synchronism as a gantry crane when the crossbeam is mounted on the pair.

6. Wind farm installation vessel according to any of the claims 1 to 5, wherein the main crane (8) is mounted on a crane structure extending upwards from the side section (6), preferably a crane structure extending around one of the jack-up legs (2).

7. Wind farm installation vessel according to any of the claims 1 to 6, wherein the individual jack-up leg (2) has a length of at least 60 metres, preferably with a possible leg extension portion resulting in a total leg length of at least 75 metres, and wherein the jack-up legs (2) are operable to lift the wind farm installation vessel (1) out of the water to a position where the main crane (8) is utilized for mounting a nacelle or a wing onto the wind turbine construction.

8. Wind farm installation vessel according to any of the claims 1 to 7, wherein the main crane (8) has a lifting height above sea level of at least 110 meters when the wind farm installation vessel (1) is jacked up at an installation site where the water depth is 40 metres.

9. Wind farm installation vessel according to any of the claims 1 to 8, wherein a removable cargo secondary deck (25) is provided in the area between the two cantilevered arms (3).

10. Method of installation used in the construction of an offshore wind turbine farm where a self-propelled offshore wind farm installation vessel (1) installs wind turbine foundations, towers, nacelles and wings to the wind turbine constructions erected from the sea bottom at the offshore farm, **characterized in that** wind farm installation vessel (1) at open see at the area of the offshore installation site is ballasted to a first draught, at which the cargo main deck (5) is submerged below sea level, and at least two jack-up legs (3) on the wind farm installation vessel are brought into contact with the sea bottom, and a barge with parts for construction of the wind farm is received at a cargo main deck (5) of the vessel, following which the vessel is positioned at a particular site of installation and is jacked-up by at least four jack-up legs (3) on the vessel, and a main crane (8) lifts a part from the barge on the main cargo deck (5) to the wind turbine construction erected from the sea bottom.

11. Method of installation according to claim 10, wherein the barge with parts for construction of the wind farm carries foundations for wind turbines when the barge is received on the cargo main deck (5).

12. Method of installation according to claim 10, wherein the barge with parts for construction of the wind farm carries a template for ramming foundation piles into the sea bottom and foundation piles when the barge is received on the cargo main deck (5).

13. Method of installation according to claim 10, wherein the wind farm installation vessel (1) following installation of foundations at the offshore wind turbine farm under construction transfers to harbor, where turbine wings, turbine towers and nacelles for at least 9 wind turbines are loaded onto the cargo main deck (5) and possibly onto a cargo secondary deck (25) temporarily mounted in an area between two cantilevered arms (3) on the vessel, and then the wind farm installation vessel transfers back to the offshore farm under construction and installs the towers, nacelles and wings.

14. Method of installation according to any of claims 10 to 13, wherein a pair of trolley winches (12) carrying a crossbeam (20) in a gantry crane configuration is used to lift a nacelle or another wind turbine part from its storage position on the cargo main deck (5) to a launch position on the deck, following which the main crane lifts the nacelle or other wind turbine part from the launch position.

## Patentansprüche

1. Selbstfahrendes Offshore-Windpark Installationsschiff (1) mit mindestens vier Hubbeinen (2) und einem Rumpf mit zwei auskragenden Armen (3) am Heckende und einem Entladeraum zwischen den auskragenden Armen, wobei der Rumpf ein Hauptfrachtdeck (5) und einen Seitenabschnitt (6) aufweist, der sich auf jeder Längsseite des Hauptfrachtdecks nach oben erstreckt, wobei das Windpark-Installationsschiff Ballasttanks (7) und ein Ballastpumpsystem zum Ändern des Tiefgangs des Schiffs zwischen mindestens einem ersten Tiefgang, bei dem das Hauptfrachtdeck (5) unter dem Meeresspiegel liegt, und einem zweiten Tiefgang, bei dem das Hauptfrachtdeck (5) über dem Meeresspiegel liegt, aufweist, **dadurch gekennzeichnet, dass** das Windpark-Installationsschiff einen Hauptkran (8) aufweist, der an einem der Seitenabschnitte befestigt ist, wobei der Hauptkran einen Ausleger (9) mit einer Länge von mindestens 50 Metern aufweist, und dass das einzelne Hubbein eine Länge von mindestens 45 Metern aufweist, sodass das Windpark-Installationsschiff auf dem offenen Meer im Bereich des Offshore-Installationsstandorts mindestens eine erste Betriebsposition aufweist, in der das Schiff, das auf den ersten Tiefgang beballastet ist, und wobei mindestens zwei Hubbeine (2) mit dem Meeresboden in Kontakt stehen, Mittel umfasst, um auf dem Hauptfrachtdeck eine Barge mit Teilen zur Errichtung des Windparks aufzunehmen, und eine zweite Betriebsposition, in der das Schiff (1) durch die mindestens vier Hubbeine (2) angehoben ist und der Hauptkran (8) ein Teil aus der Barge auf dem Hauptfrachtdeck zu der vom Meeresboden errichteten Windturbinenkonstruktion heben kann.

2. Windpark-Installationsschiff nach Anspruch 1, wobei das Schiff andere daran bereitgestellte Hubausrüstung umfasst, wobei die andere Hubausrüstung an jedem Seitenabschnitt (6) zwei Katzwinden (12) beinhaltet, die an einer Schienenstruktur (13) bewegbar sind, die sich am Seitenabschnitt entlang im Wesentlichen der gesamten Länge des Hauptfrachtdecks (5) und des auskragenden Arms (3) erstreckt.

3. Windpark-Installationsschiff nach Anspruch 2, wobei jeder Seitenabschnitt (6) einen unteren Abschnitt (14) von viereckigem Querschnitt und einen oberen wandförmigen Abschnitt (15) umfasst, der auf seiner Oberseite die Schienenstruktur (13) trägt und auf seiner dem Hauptfrachtbereich abgewandten Seite mit Versteifungen (17) bereitgestellt ist.

4. Windpark-Installationsschiff nach Anspruch 3, wobei die einzelne Katzwinde (12) einen Träger (18) beinhaltet, der um die Schienenstruktur gehakt ist und einen Katzantrieb beinhaltet, der mit der Schienenstruktur (13) in Eingriff steht, die vorzugsweise eine ortsfeste Zahnschiene ist.

5. Windpark-Installationsschiff nach einem der Ansprüche 2 bis 4, wobei die einzelne Katzwinde (12) einen nach oben gewandten Stützbereich (19) zum zeitweiligen Befestigen des Endes eines Portalkranquerträgers (20) aufweist und wobei ein Paar Katzwinden im Gleichlauf als ein Portalkran betreibbar ist, wenn der Querträger am Paar befestigt ist.

6. Windpark-Installationsschiff nach einem der Ansprüche 1 bis 5, wobei der Hauptkran (8) an einer Kranstruktur, die sich vom Seitenabschnitt (6) nach oben erstreckt, vorzugsweise einer Kranstruktur, die sich um eines der Hubbeine (2) erstreckt, befestigt ist.

7. Windpark-Installationsschiff nach einem der Ansprüche 1 bis 6, wobei das einzelne Hubbein (2) eine Länge von mindestens 60 Metern aufweist, vorzugsweise mit einem möglichen Beinverlängerungsabschnitt, der zu einer Gesamtlänge von mindestens 75 Metern führt, und wobei die Hubbeine (2) dazu betreibbar sind, das Windpark-Installationsschiff (1) aus dem Wasser heraus in eine Position zu heben, in der der Hauptkran (8) zum Montieren einer Gondel oder eines Flügels an einer Windturbinenkonstruktion verwendet wird.

8. Windpark-Installationsschiff nach einem der Ansprüche 1 bis 7, wobei der Hauptkran (8) eine Hubhöhe über dem Meeresspiegel von mindestens 110 Metern aufweist, wenn das Windpark-Installationsschiff (1) an einem Installationsstandort angehoben ist, wo die Wassertiefe 40 Meter beträgt.

9. Windpark-Installationsschiff nach einem der Ansprüche 1 bis 8, wobei in dem Bereich zwischen den beiden auskragenden Armen (3) ein abnehmbares Nebenfrachtdeck (25) bereitgestellt ist.

10. Installationsverfahren zur Verwendung beim Bau eines Offshore-Windturbinenparks, wobei ein selbstfahrendes Offshore-Windparkinstallationsschiff (1) Windturbinengründungen, -türme, -gondeln und -flügel an den vom Meeresboden bei dem Offshore-Park errichteten Windturbinenkonstruktionen installiert, **dadurch gekennzeichnet, dass** das Windpark-Installationsschiff (1) auf offenem Meer im Bereich des Offshore-Installationsstandorts auf einen ersten Tiefgang beballastet wird, bei dem das Hauptfrachtdeck (5) unter dem Meeresspiegel liegt, und wobei mindestens zwei Hubbeine (3) am Windpark-Installationsschiff mit dem Meeresboden in Kontakt gebracht werden und eine Barge mit Teilen zur Errichtung des Windpark auf einem Hauptfrachtdeck (5) des Schiffs aufgenommen wird, woraufhin das Schiff an einem bestimmten Installationsstandort positioniert und durch mindestens vier Hubbeine (3) am Schiff angehoben wird, und wobei ein Hauptkran (8) ein Teil aus der Barge auf dem Hauptfrachtdeck (5) zu der vom Meeresboden errichteten Windturbinenkonstruktion hebt.

11. Installationsverfahren nach Anspruch 10, wobei die Barge mit Teilen zur Errichtung des Windparks Gründungen für Windturbinen trägt, wenn die Barge auf dem Hauptfrachtdeck (5) aufgenommen wird.

12. Installationsverfahren nach Anspruch 10, wobei die Barge mit Teilen zur Errichtung des Windparks eine Vorlage zum Rammen von Gründungspfeilern in den Meeresboden und Gründungspfeiler trägt, wenn die Barge auf dem Hauptfrachtdeck (5) aufgenommen wird.

13. Installationsverfahren nach Anspruch 10, wobei das Windpark-Installationsschiff (1) im Anschluss an die Installation von Gründungen bei dem zu errichtenden Offshore-Windturbinenpark zum Hafen übersetzt, wo Turbinenflügel, Turbinentürme und -gondeln für mindestens 9 Windturbinen auf das Hauptfrachtdeck (5) und möglicherweise auf ein zeitweilig in einem Bereich zwischen zwei auskragende Arme (3) auf dem Schiff befestigtes Nebenfrachtdeck (25) geladen werden und dann das Windpark-Installationsschiff zurück zu dem zu errichtenden Offshore-Park übersetzt und die Türme, Gondeln und Flügel installiert.

14. Installationsverfahren nach einem der Ansprüche 10 bis 13, wobei ein Paar Katzwinden (12), die einen Querträger (20) in einer Portalkrankonfiguration tragen, verwendet wird, um eine Gondel oder ein anderes Windturbinenteil aus seiner Lagerposition auf dem Hauptfrachtdeck (5) in eine Startposition auf dem Deck zu heben, woraufhin der Hauptkran die Gondel bzw. das andere Windturbinenteil aus der Startposition hebt.

## Revendications

1. Navire (1) d'installation de parc éolien offshore autonome ayant au moins quatre pieds autoélévateurs (2) et une coque avec deux bras en porte-à-faux (3) dans l'extrémité arrière et un espace de déchargement entre les bras en porte-à-faux, ladite coque ayant un pont principal de chargement (5) et une section latérale (6) s'étendant vers le haut de chaque côté longitudinal du pont principal de chargement, le navire d'installation de parc éolien ayant des réservoirs de ballast (7) et un système de pompage de ballast pour modifier le tirant d'eau du navire entre au moins un premier tirant d'eau, auquel le pont principal de chargement (5) est immergé sous le niveau de la mer, et un second tirant d'eau, auquel le pont principal de chargement (5) est au-dessus du niveau de la mer, **caractérisé en ce que** le navire d'installation de parc éolien a une grue principale (8) montée sur une des sections latérales, ladite grue principale a une flèche (9) d'une longueur d'au moins 50 mètres, et **en ce que** le pied autoélévateur individuel a une longueur d'au moins 45 mètres, de sorte que le navire d'installation de parc éolien au large dans la zone du site d'installation offshore ait au moins une première position de travail, dans laquelle le navire lesté au premier tirant d'eau et avec au moins deux pieds autoélévateurs (2) en contact avec le fond marin comprend un moyen pour recevoir sur le pont principal de chargement une barge avec des pièces pour la construction du parc éolien, et une seconde position de travail dans laquelle le navire (1) est levé par les au moins quatre pieds autoélévateurs (2) et la grue principale (8) peut lever une pièce à partir de la barge sur le pont principal de chargement jusqu'à la construction d'éolienne montée sur le fond marin.

2. Navire d'installation de parc éolien selon la revendication 1, le navire comprenant d'autres équipements de levage disposés sur celui-ci, les autres équipements de levage comprenant, sur chaque section latérale (6), deux treuils sur chariot (12), qui sont mobiles sur une structure de rail (13) s'étendant sur la section latérale sensiblement sur toute la longueur du pont principal de chargement (5) et le bras en porte-à-faux (3).

3. Navire d'installation de parc éolien selon la revendication 2, chaque section latérale (6) comprenant une partie inférieure (14) de section transversale quadrangulaire et une partie supérieure (15) en forme de paroi, qui sur sa partie supérieure porte la structure de rail (13) et sur son côté opposé à la zone principale du chargement est munie de raidisseurs (17).

4. Navire d'installation de parc éolien selon la revendication 3, le treuil sur chariot (12) individuel comprenant un support (18) qui est accroché autour de la structure de rail et comprend un entraînement sur chariot en prise avec la structure de rail (13), qui est de préférence une crémaillère fixe.

5. Navire d'installation de parc éolien selon l'une quelconque des revendications 2 à 4, le treuil sur chariot (12) individuel ayant une zone d'appui (19) orientée vers le haut pour monter temporairement l'extrémité d'une traverse (20) de grue portique, et une paire de treuils sur chariot pouvant être utilisée en synchronisme comme grue portique lorsque la traverse est montée sur la paire.

6. Navire d'installation de parc éolien selon l'une quelconque des revendications 1 à 5, la grue principale (8) étant montée sur une structure de grue s'étendant vers le haut à partir de la section latérale (6), de préférence une structure de grue s'étendant autour d'un des pieds autoélévateurs (2).

7. Navire d'installation de parc éolien selon l'une quelconque des revendications 1 à 6, le pied autoélévateur (2) individuel ayant une longueur d'au moins 60 mètres, de préférence avec une partie d'extension de pied possible résultant en une longueur totale de pied d'au moins 75 mètres, et les pieds autoélévateurs (2) permettant de lever le navire (1) d'installation de parc éolien hors de l'eau à une position où la grue principale (8) est utilisée pour monter une nacelle ou une aile sur la construction d'éolienne.

8. Navire d'installation de parc éolien selon l'une quelconque des revendications 1 à 7, la grue principale (8) ayant une hauteur de levage au-dessus du niveau de la mer d'au moins 110 mètres lorsque le navire (1) d'installation de parc éolien est autoélevé sur un site d'installation où la profondeur d'eau est de 40 mètres.

9. Navire d'installation de parc éolien selon l'une quelconque des revendications 1 à 8, un pont secondaire de chargement (25) amovible étant disposé dans la zone située entre les deux bras en porte-à-faux (3).

10. Procédé d'installation utilisé dans la construction d'un parc éolien offshore, un navire (1) d'installation de parc éolien offshore autonome installant des fondations, des tours, des nacelles et des ailes d'éolienne sur les constructions d'éolienne érigées à partir du fond marin du parc offshore, **caractérisé en ce que** le navire (1) d'installation d'éolienne au large dans la zone du site d'installation offshore est lesté à un premier tirant d'eau, auquel le pont principal (5) est immergé sous le niveau de la mer, et au moins deux pieds autoélévateurs (3) sur le navire d'installation de parc éolien sont mis en contact avec le fond marin, et une barge avec des pièces pour la construction du parc éolien est reçue sur un pont principal de chargement (5) du navire, après quoi le navire est positionné sur un site particulier d'installation et est autoélevé par au moins quatre pieds autoélévateurs (3) sur le navire, et une grue principale (8) lève une pièce à partir de la barge sur le pont principal de chargement (5) jusqu'à la construction d'éolienne érigée sur le fond marin.

11. Procédé d'installation selon la revendication 10, la barge avec des pièces pour la construction du parc éolien portant des fondations pour éoliennes lorsque la barge est reçue sur le pont principal de chargement (5).

12. Procédé d'installation selon la revendication 10, la barge avec des pièces pour la construction du parc éolien portant un gabarit pour enfoncer des pieux de fondation dans le fond marin et des pieux de fondation lorsque la barge est reçue sur le pont principal de chargement (5).

13. Procédé d'installation selon la revendication 10, le navire (1) d'installation de parc éolien après l'installation des fondations du parc éolien offshore en construction étant transféré au port, où des ailes d'éolienne, des tours d'éolienne et des nacelles pour au moins 9 éoliennes sont chargées sur le pont principal de chargement (5) et éventuellement sur un pont secondaire de chargement (25) monté temporairement dans une zone entre deux bras en porte à faux (3) sur le navire, puis le navire d'installation du parc éolien revenant au parc offshore en construction et installant les tours, les nacelles et les ailes.

14. Procédé d'installation selon l'une quelconque des revendications 10 à 13, une paire de treuils sur chariot (12) portant une traverse (20) dans une configuration de grue portique étant utilisée pour lever une nacelle ou une autre pièce d'éolienne de sa position de stockage sur le pont principal de chargement (5) à une position de lancement sur le pont, après quoi la grue principale lève la nacelle ou l'autre pièce d'éolienne depuis la position de lancement.
